# EUROPÄISCHE PATENTSCHRIFT

(11) **EP 2 958 661 B1**
(45) Veröffentlichungstag und Bekanntmachung des Hinweises auf die Patenterteilung: **26.08.2026**
(21) Anmeldenummer: 14706546.0
(22) Anmeldetag: 21.02.2014
(51) Int. Cl.: B01D 53/94, B01J 35/00, F01N 3/20, B01J 29/08, B01J 29/18, B01J 29/40, B01J 29/65, B01J 29/70, B01J 29/83, B01J 29/85, B01J 35/56, B01J 37/02, F01N 3/035, F01N 3/10

(54) **VERFAHREN ZUR SCR MIT VERBESSERTEM NOX-UMSATZ**
SCR PROCESS HAVING IMPROVED NOX CONVERSION
PROCÉDÉ SCR AVEC RENDEMENT EN NOX AMÉLIORÉ

(30) Priorität: 25.02.2013 DE 102013003112
(43) Veröffentlichungstag der Anmeldung: 30.12.2015
(73) Patentinhaber: Umicore AG & Co. KG, 63457 Hanau-Wolfgang (DE)
(72) Erfinder: REITH, Christoph, 97786 Motten (DE); SEYLER, Michael, 63814 Mainaschaff (DE)
(74) Vertreter: Retzow, Stefan
(86) Internationale Anmeldenummer: PCT/EP2014/053464
(87) Internationale Veröffentlichungsnummer: WO 2014/128270

(56) Entgegenhaltungen:
- EP-A1- 0 617 199
- EP-A1- 1 054 139
- EP-A1- 2 105 426
- WO-A1-2008/006427
- WO-A1-2009/103549
- WO-A1-2011/131324
- DE-A1- 102006 027 357
- US-A1- 2010 107 606
- US-A1- 2011 162 350

## Beschreibung

Die vorliegende Erfindung befasst sich mit der Möglichkeit die sogenannte selektive katalytische Reduktion (SCR = Selective Catalytic Reduction), also die selektive Reaktion von Stickoxiden mit Ammoniak im Abgas von Verbrennungsprozessen an einem dafür geeigneten Abgaskatalysator - dem SCR-Katalysator - zu verbessern. Im Katalysator zur Speicherung von Ammoniak verwendeten Materialien werden hierzu in einer besonderen Art und Weise auf dem Katalysatorträger verteilt.

Das Abgas von Verbrennungsprozessen, insbesondere von Dieselmotoren aber auch direkt einspritzenden mager betriebenen Ottomotoren, enthält neben den aus einer unvollständigen Verbrennung des Kraftstoffs resultierenden Schadgasen Kohlenmonoxid (CO) und Kohlenwasserstoffe (HC) auch Rußpartikel (PM) und Stickoxide (NOₓ). Außerdem enthält das Abgas von z.B. Dieselmotoren bis zu 15 Vol.-% Sauerstoff. Es ist bekannt, dass die oxidierbaren Schadgase CO und HC durch Überleiten über einen geeigneten Oxidationskatalysator in unbedenkliches Kohlendioxid (CO₂) und Wasser (H₂O) umgewandelt und Partikel durch Durchleiten des Abgases durch einen geeigneten Rußpartikelfilter entfernt werden können. Auch Technologien zur Entfernung von Stickoxiden aus Abgasen in Gegenwart von Sauerstoff sind im Stand der Technik gut bekannt. Eines dieser "Entstickungsverfahren" ist das SCR-Verfahren. Dabei kann Ammoniak als solches oder in Form einer unter Umgebungsbedingungen zu Ammoniak zersetzlichen Vorläuferverbindung dem Abgasstrom zugegeben werden, wobei unter "Umgebungsbedingungen" die aktuellen Bedingungen im räumlichen Bereich des Abgasstroms vor dem SCR-Katalysator verstanden werden. Zur Durchführung des SCR-Verfahrens sind eine Quelle zur Bereitstellung des Reduktionsmittels, eine Einspritzvorrichtung zur bedarfsgerechten Eindosierung des Reduktionsmittels in das Abgas und ein im Strömungsweg des Abgases angeordneter SCR-Katalysator notwendig. Die Gesamtheit aus Reduktionsmittelquelle, SCR-Katalysator und anströmseitig zum SCR-Katalysator angeordneter Einspritzvorrichtung wird auch als SCR-System bezeichnet.

Mit den künftig geltenden gesetzlichen Grenzwerten wird für alle neu zugelassenen Dieselfahrzeuge und mager verbrennenden direkt einspritzenden Benzinmotoren eine Abgasnachbehandlung zur Entfernung aller vom Motor emittierten Schadgase im Allgemeinen unumgänglich sein. Somit wird es für die aktuellen Applikationen zur Dieselabgasnachbehandlung notwendig, Dieseloxidationskatalysator, Dieselpartikelfilter und SCR-Systeme zu kombinieren, wobei die Kombination dieser Aggregate vor allem für den SCR-Katalysator geänderte Betriebsbedingungen mit sich bringt. Derzeit sind drei derartige Systeme in der Erprobung: Im sogenannten "SCRT^{®}-System" nach EP1054722 B1 werden in Strömungsrichtung des Abgases ein Dieseloxidationskatalysator, ein Dieselpartikelfilter und ein SCR-System hintereinander angeordnet. Eine weitere Modifikation dieses Systems zeigt die EP2112339 A1 (cDPF - DOC - SCR). Alternativ kann das SCR-System zwischen einem motornahen Dieseloxidationskatalysator und einem Dieselpartikelfilter im Unterboden des Fahrzeugs (DOC - SCR - DPF; WO12123660 A1) angeordnet werden.

Die Reinigungswirkung moderner SCR-Systeme für Stickoxide beträgt in optimalen Bereichen mehr als 95%. Deshalb wird das SCR-Verfahren gegenwärtig zur Entstickung von Dieselabgasen für Applikationen in Personenkraftwagen und zur Regelanwendung bei Nutzfahrzeugen als vielversprechendstes Reinigungsverfahren für Stickoxide angesehen. Insbesondere bei Personenkraftwagen ist jedoch zu beobachten, dass sich die im NEDC ("New European Driving Cycle") oder WHTC (World Harmonized Transient Cycle) auftretenden Temperaturen des zu reinigenden Abgases immer mehr in den kälteren Bereich verschieben. Dies bedeutet, dass ein im Unterboden verbauter SCR-Katalysator weniger Hitze für die notwendige Reaktion erfährt. Die SCR-Reaktion startet erst bei etwa 200-250°C in erkläglichem Maße. Weiterhin kann eine Dosierung von Harnstoff als Quelle für das Reduktionsmittel Ammoniak erst bei Temperaturen ab 180°C kontrolliert ermöglicht werden. Um unerwünschte Ablagerungen von Harnstoff und Folgeprodukten in der Abgasanlage nicht in Kauf nehmen zu müssen, führt diese Entwicklung der Abgastemperaturen dazu, dass das SCR-Verfahren im sogenannten "innerstädtischen Teil" (ECE) des NEDC aufgrund der vorherrschenden niedrigen Temperaturen nicht mehr effektiv zum Einsatz kommen kann. Stickoxid-Durchbrüche während des ECE und damit eine Überschreitung der vorgeschriebenen NOₓ-Grenzwerte im Gesamtfahrzyklus des NEDC sind die Folge. Gleiches trifft auch auf den entsprechenden, transienten Nfz-Zyklus den WHTC zu. Mit den durch die Dosierhardware vorgegebenen Dosiergrenzen sind insbesondere der kalte Teil wie auch der Beginn des warmen Teils nach der Abstellphase eine besondere Herausforderung.

Es wird daher weiterhin nach Möglichkeiten gesucht, die Effektivität der SCR-Katalysatoren zu erhöhen, um eine möglichst optimale Reduktion der Stickoxide über einen möglichst weiten Temperaturbereich hinweg gewährleisten zu können. Eine Strategie besteht darin, immer neue und leistungsfähigere Materialen zu finden, welche die SCR-Reaktion katalysieren können. Es hat sich hier z.B. als vorteilhaft erwiesen, zusätzlich zum oder als katalytisch aktives Material ein solches einzusetzen, welches befähigt ist, Ammoniak zwischenzuspeichern, um so ein punktuelles Überangebot oder ein Fehlen von ausreichend Ammoniak für die Reduktion auszugleichen (WO05099873 A1). Des Weiteren kommen besondere Kombinationen von Stickoxidverminderungskatalysatoren, insbesondere Stickoxidspeicherkatalysatoren und SCR-Katalysatoren (z.B. WO10022909 A1), in Betracht, um die Reduktion zu unschädlichem Stickstoff über einen weiteren Temperaturbereich bewerkstelligen zu können. Eine zusätzliche Möglichkeit besteht in der Tatsache, die SCR-Katalysatoren in geschichteter (z.B. EP2428659 A1) oder zonierter (z.B. EP2040834 A1) Form einzusetzen.

Zur Steigerung der Wirksamkeit von Katalysatoren ist weiterhin vorgeschlagen worden, eine anisotrope Beladung des Trägers mit katalytisch aktivem Material vorzusehen (US20040254072 A1, US20110123421 A1, EP1486248 A1). In Bezug auf SCR-Katalysatoren lehrt die US20120186229 A1, dass am Eingang des Katalysatorträgers eine höhere Konzentration der katalytisch aktiven Komponenten aufgebracht werden soll als am Ausgang. Die EP1892396 B1 propagiert für im Auslassbereich von Partikelfilter angeordnete SCR-Katalysatoren einen Anstieg der katalytisch aktiven Spezies in Strömungsrichtung aus Wärmeschutzgründen.

WO 2009/103549 A1 betrifft einen SCR-Katalysator umfassend ein von Abgasen durchströmbares Trägermaterial und eine auf Bereiche des Trägermaterials aufgebrachte Beschichtung aus einer katalytisch aktiven Zusammensetzung, wobei die SCR-aktive Komponente und die NH₃-Speicherkomponente voneinander verschieden sind. Die Erfindung betrifft weiterhin die Verwendung des erfindungsgemäßen SCR-Katalysators zur Reduzierung von Stickoxiden mobiler oder stationärer Verbrennungsanlagen.

EP 2 105 426 A1 betrifft eine Wabenstruktur umfassend eine Säulenwabeneinheit mit mehreren Zellen, die sich von einer ersten Endfläche zu einer zweiten Endfläche der Wabenstruktur erstrecken. Die Zellen sind durch Zellwände unterteilt, die in Längsrichtung der Wabenstruktur ausgebildet sind. Die Zellwände enthalten ein NOₓ-adsorbieren-des Material und ein anorganisches Bindemittel und tragen ein Ammoniak-adsorbierendes Material. Die Menge des auf den Zellwänden gelagerten Ammoniak-adsorbierenden Materials variiert zwischen dem ersten und dem zweiten Endabschnitt.

Bei der Entstickung des Abgases von Verbrennungsmotoren, insbesondere von Dieselmotoren, besteht bei Anwendung des Verfahrens der selektiven katalytischen Reduktion stets das Problem, dass für alle Lastzustände des Verbrennungsmotors hohe Abscheidegrade für die Stickoxide und ein nur sehr geringer Ammoniakschlupf am Katalysator eingestellt werden sollen. Die EP 0 617 199 A1 sieht hierzu einen Katalysator (8) vor, der aus einem Katalysatorträger (26,28) und einer katalytisch aktiven Schicht (34) besteht, und bei dem die speicherbare Menge an Reduktionsmittel, zumeist Ammoniak, pro Längeneinheit in Strömungsrichtung des Abgases (30) zunimmt. Dies führt dazu, dass der Katalysator (8) hinsichtlich seines Ansprechverhaltens und seiner AmmoniakSpeicherkapazität wechselnden Betriebszuständen der Brennkraftmaschine entlang seines Strömungsweges schnell folgt, ohne dass es zu nennenswertem Schlupf von Ammoniak und Stickoxiden kommt. Die Erfindung ist grundsätzlich bei allen Brennkraftmaschinen einsetzbar, die mit Luftüberschuss laufen.

In der EP 1 054 139 A1 weist der als Wärmequelle dienende Verdampfer (5) eine beheizbare Kollisionsfläche auf, auf die das aus einer Fördereinheit (4) zugeführte Reduktionsmittel oder ein Mikrowellengenerator unter Druck geleitet wird. Die Erfindung betrifft eine Abgasreinigungsvorrichtung für Kraftfahrzeuge mit einem in einem Abgasstrang angeordneten Katalysator (3) zur Reduzierung der im Abgas enthaltenen Stickoxide unter Einbeziehung eines in das Abgasrohr eingebrachten dampfförmigen Reduktionsmittels und einer Reduktionsmittel-Zuführeinrichtung (4) zur Zufuhr des Reduktionsmittels oder Reduktionsvorprodukts zum Abgasstrom, wobei die Zuführeinrichtung einen im Abgasrohr vor dem Stickoxide reduzierenden Katalysator angeordneten Verdampfer umfasst. Bevorzugte Merkmale: Die Kollisionsfläche besteht aus einer Platte, die parallel zur Abgasströmungsrichtung auf der Innenseite einer Rohrleitung des Abgasrohrs (2) liegt.

Die WO 2008/006427 A1 betrifft einen texturierten SCR-Katalysator, dessen Arbeitsfenster ein deutlich breiteres Temperaturfenster als den bisherigen Bereich zwischen 350°C und 500°C abdeckt und mit dessen Hilfe komplexe Abgassysteme bei gleichzeitiger Reduzierung der Komponentenkosten deutlich vereinfacht werden können.

US 2010/107606 A1 beschreibt ein Verfahren zur Nachbehandlung der NOₓ-Emissionen aus dem Abgasstrom des Motors umfassend eine katalytische Vorrichtung und erste und zweite Vorrichtungen zur ammoniakselektiven katalytischen Reduktion. Die erste und die zweite Vorrichtung zur ammoniakselektiven katalytischen Reduktion enthalten jeweils ein unedles Metall. Der Motorbetrieb kann moduliert werden, um einen Abgasstrom aus dem Motor zu erzeugen, der in Ammoniak umgewandelt wird. Das Ammoniak wird in der ersten und zweiten Vorrichtung zur ammoniakselektiven katalytischen Reduktion gespeichert und zur Reduzierung der NOₓ-Emissionen im Abgasstrom verwendet.

Die US 2011/162350 A1 beschreibt ein Verfahren zur Steuerung eines Verbrennungsmotors und eines Abgassystems mit SCR sowie eines Motors und Abgassystems mit SCR, das in Echtzeit die NOₓ-Umwandlungseffizienz eines Abgasstroms überwacht, der vom Verbrennungsmotor durch den SCR ausgegeben wird. Es wird ermittelt, ob die überwachte NOₓ-Umwandlungseffizienz eine vorgegebene Zielumwandlungseffizienz überschreitet, beispielsweise ein Ziel, das auf einer vorgegebenen zulässigen Menge an NOₓ-Emissionen basiert. Wenn der überwachte NOₓ-Umwandlungswirkungsgrad den vorgegebenen Wert überschreitet, wird die NOₓ-Konzentration im Abgasstrom um einen Wert erhöht, der auf der Differenz zwischen dem überwachten Umwandlungswirkungsgrad und dem vorgegebenen Zielumwandlungswirkungsgrad basiert. Ein weiteres hierin bereitgestelltes Verfahren und Motor- und Abgassystem verfolgt eine auf einem Katalysator des SCR gespeicherte Ammoniakmenge basierend auf einer Feedforward-Berechnung des eingespritzten Harnstoffs basierend auf dem NOₓ-Massenstrom aus dem Motor und der Reduktionseffizienz des SCR-Katalysators basierend auf einer Temperatur des SCR-Katalysators und betreibt den Motor und das Abgassystem in einem NOₓ-reichen Modus, in dem ein EGR-Anteilsbefehl basierend auf der verfolgten Menge an gespeichertem Ammoniak angepasst wird, um eine Menge an EGR-Gas zu verringern, die in einen Einlass des Verbrennungsmotors eintritt, und dadurch die auf dem SCR-Katalysator gespeicherte Ammoniakmenge zu reduzieren.

DE 10 2006 027 357 A1 offenbart ein Verfahren, bei dem die Speicherkapazität einer selektiven katalytischen Reduktionsstufe (16a) in einer Strömungsrichtung als Bemessungswert für die Menge eines chemischen Reduktionsmittels, z. B. Ammoniak, und seines Vorläufers verwendet wird. Das Reduktionsmittel wird dabei derart geregelt, dass ein Beladungsgrad der Reduktionsstufe zwischen einer vorgegebenen unteren Beladungsschwelle und einer vorgegebenen oberen Beladungsschwelle liegt, wobei zwei selektive katalytische Reduktionsstufen (16a, 16b) in einem bestimmten Abstand zueinander angeordnet sind.

Die vorliegende Erfindung beschäftigt sich ebenfalls mit der weiteren Verbesserung von SCR-Katalysatoren. Dabei sollte die gefundene Lösung den Katalysatoren des Standes der Technik zumindest in der Effizienz oder aber bei gleicher Effizienz vom Kostenfaktor her überlegen sein.

Diese und weitere sich aus dem Stand der Technik für den Fachmann in naheliegender Weise ergebenden Aufgaben werden gelöst ein Verfahren zur Verminderung der Stickoxide im Abgas eines Verbrennungsprozesses von mager verbrennenden Motoren durch Reaktion mit Ammoniak über einem SCR-Abgaskatalysator, wobei man wobei man das Abgas in Gegenwart von Ammoniak über den SCR-Abgaskatalysator leitet, und wobei der SCR-Abgaskatalysator 2 oder 3 Tragkörper aufweist, die ausgewählt sind aus Durchfluss-Monolithen oder Partikelfiltern, und wobei die 2 oder 3 Tragkörper ein oder mehrere Speichermaterialien für Ammoniak umfassen, bei denen ein Material mit Ammoniakspeicherkapazität so in Strömungsrichtung des Abgases auf den Tragkörpern verteilt ist, dass in Strömungsrichtung betrachtet, ein Bereich mit niedriger Ammoniakspeicherkapazität gefolgt wird von einem Bereich höherer Ammoniakspeicherkapazität, dadurch gekennzeichnet, dass
das Material, welches die Ammoniakspeicherfähigkeit besitzt, auch die katalytische Aktivität für die SCR-Reaktion bestimmt, und dass dieses Material ausgewählt ist aus der Gruppe bestehend aus Zeolithen, wie z.B. Mordenite (MOR), Y-Zeolithe (FAU), ZSM-5 (MFI), Ferrierite (FER), Chabazite (CHA), und β-Zeolithe (BEA) sowie zeolithähnlichen Materialien, wie z.B. Aluminiumphosphate (AIPO) und Siliziumaluminiumphosphat (SAPO) oder Mischungen davon,
und wobei das Verhältnis an Ammoniakspeicherkapazität von einem Bereich mit niedriger Ammoniakspeicherkapazität zu einem Bereich höherer Ammoniakspeicherkapazität bzw. bevorzugt von anströmseitig vorhandener zu abströmseitig vorhandener Speicherkapazität 30 - 70% beträgt,
wobei sich der Bereich niedriger Speicherkapazität durch eine Kapazität von 01. - 2.5 g NH₃/Liter Katalysatorvolumen und der Bereich erhöhter Speicherkapazität durch eine Kapazität von 0.2 - 3.5 g NH₃/Liter Katalysatorvolumen auszeichnet, und wobei für den Fall, dass Partikelfilter als Tragkörper eingesetzt werden, diese selbst keinen Anstieg des katalytisch aktiven Materials aufweisen sollen, so dass in jedem Volumenelement des Partikelfilters entlang der Strömungsrichtung eine im Rahmen der Produktionsgenauigkeit nicht steigende Konzentration an katalytisch aktivem Material vorhanden ist.

Von Anspruch 1 abhängige Unteransprüche beziehen sich auf bevorzugte Ausgestaltungen des erfindungsgemäßen Verfahrens.

Dadurch, dass man für die Verminderung von Stickoxiden im Abgas von mager verbrennenden Motoren durch Reaktion mit Ammoniak einen Abgaskatalysator einsetzt, der einen oder mehrere Tragkörper aufweisend ein oder mehrere Speichermaterialien für Ammoniak umfasst, bei dem ein Material mit Ammoniakspeicherkapazität so in Strömungsrichtung des Abgases auf dem oder den Tragkörpern verteilt ist, dass in Strömungsrichtung betrachtet, ein Bereich mit niedriger Ammoniakspeicherkapazität gefolgt wird von einem Bereich höherer Ammoniakspeicherkapazität, wobei das Material, welches die katalytische Aktivität für die betrachtete Reaktion bestimmt, aus einem Material aufgebaut ist, welches eine Ammoniakspeicherfähigkeit besitzt, und als letzteres Verbindungen ausgewählt aus der Gruppe bestehend aus Zeolithen, wie z.B. Mordenite (MOR), Y-Zeolithe (FAU), ZSM-5 (MFI), Ferrierite (FER), Chabazite (CHA), und β-Zeolithe (BEA) sowie zeolithähnlichen Materialien, wie z.B. Aluminiumphosphate (AlPO) und Siliziumaluminiumphosphat (SAPO) oder Mischungen davon eingesetzt werden und wobei ein Partikelfilter als Tragkörper selbst keinen Anstieg des katalytisch aktiven Materials aufweisen soll, gelangt man überraschend einfach, dafür aber nicht minder vorteilhaft zur Lösung der gestellten Aufgabe. Mit dem erfindungsgemäßen Verfahren ist es möglich, bei vergleichbarer Aktivität Einsatzstoffkosten zu sparen oder bei gleichem Einsatz der Komponenten eine höhere Effektivität des Katalysators oder Katalysatorsystems zu gewährleisten.

Grundsätzlich besteht der SCR-Abgaskatalysator des hier beanspruchten Verfahrens aus zwei oder drei Tragkörpern, auf die oder in die - z.B. in die porösen Wandstrukturen - das katalytisch aktive Material (also das Material, welches letztendlich die katalytische Funktion ausübt) und das oben angesprochene Speichermaterial (das Material, welches die Ammoniakspeicherkapazität bereithält) eingearbeitet ist. Dem Fachmann ist klar, um welche Träger es sich vorliegend handeln kann. Gemeint sind so genannte Durchfluss-Monolithe oder Partikelfilter (Christian Hagelüken, Autoabgaskatalysatoren, 2005, 2. Auflage, S. 27 - 46). Derartige Aggregate (Filter als auch Durchfluss-Monolithe) sind - auch mit einer SCR-aktiven Beschichtung versehen - dem Fachmann hinlänglich geläufig (z.B. US2011271664 AA).

Im Stand der Technik bekannte übliche Filterkörper können aus Metall und/oder keramischen Materialien aufgebaut sein. Dazu gehören beispielsweise metallische Gewebe- und Gestrickfilterkörper, Sintermetallkörper und Schaumstrukturen aus keramischen Materialien. Bevorzugt werden poröse Wandflussfiltersubstrate aus Cordierit, Siliziumcarbid oder Aluminiumtitanat eingesetzt. Diese Wandflussfiltersubstrate weisen An- und Abströmkanäle auf, wobei jeweils die abströmseitigen Enden der Anströmkanäle und die anströmseitigen Enden der Abströmkanäle gegeneinander versetzt mit gasdichten "Stopfen" verschlossen sind. Hierbei wird das zu reinigende Abgas, das das Filtersubstrat durchströmt, zum Durchtritt durch die poröse Wand zwischen An- und Abströmkanal gezwungen, was eine exzellente Partikelfilterwirkung bedingt. Durch die Porosität, Poren-/Radienverteilung, und Dicke der Wand kann die Filtrationseigenschaft für Partikel ausgelegt werden. Das Speichermaterial für Ammoniak sowie das katalytisch aktive Material kann in Form von Beschichtungen in und/oder auf den porösen Wänden zwischen An- und Abströmkanälen vorliegen. Es können auch Filter zum Einsatz kommen, die direkt oder mithilfe von Bindern aus den entsprechenden Speicher- und Katalysatormaterialien extrudiert wurden, das heißt, dass die porösen Wände direkt aus dem Katalysatormaterial und Speichermaterial bestehen. Bevorzugt einzusetzende Filtersubstrate können der WO2005016497A1 oder EP2117681A entnommen werden.

Im Hinblick auf die eingesetzten Partikelfilter als Tragkörper ist zu erwähnen, dass diese anspruchsgemäß so ausgestaltet sein sollten, dass auf einem Partikelfilter kein Ansteigen des katalytisch aktiven Materials, also des Materials, welches die eigentliche SCR-Reaktion katalysiert, vorhanden sein soll. Dies bedeutet, dass in jedem Volumenelement des Partikelfilters entlang der Strömungsrichtung eine im Rahmen der Produktionsgenauigkeit nicht steigende Konzentration an katalytisch aktivem Material vorhanden ist. Bevorzugt liegt das katalytisch aktive Material in Strömungsrichtung gesehen gleichmäßig verteilt auf dem Partikelfilter vor. Da erfindungsgemäß das katalytisch aktive Material auch die Ammoniakspeicherkapazität bereitstellt, liegt in diesem Fall auch letztere auf dem Partikelfilter in Strömungsrichtung gleichmäßig verteilt vor. Anspruchsgemäß ist daher in diesem Fall ein entsprechend ausgestalteter Partikelfilter immer vergesellschaftet mit mindestens einem weiteren Tragkörper, der eine anspruchsgemäß andere Ammoniakspeicherkapazität aufweist wie der Partikelfilter.

Durchfluss-Monolithe sind im Stand der Technik übliche Katalysatorträger, die aus Metall oder keramischen Materialien bestehen können. Bevorzugt werden feuerfeste Keramiken wie zum Beispiel Cordierit eingesetzt. Die Monolithe aus Keramik besitzen meist eine wabenförmige Struktur, die aus durchgehenden Kanälen bestehen, weshalb diese auch als Kanal-Fluss-Monolithe bezeichnet werden. Das Abgas kann durch die Kanäle strömen und kommt dabei mit den Kanalwänden in Kontakt, welche mit einer katalytisch aktiven Substanz und einem Speichermaterial versehen sind. Die Anzahl der Kanäle pro Fläche wird durch die Zelldichte charakterisiert, welche üblicherweise zwischen 300 und 900 Zellen pro Quadrat inch (cells per square inch, cpsi) liegt. Die Wanddicke der Kanalwände beträgt bei Keramiken zwischen 0,5 - 0,05 mm. Es gibt die Möglichkeit, den Durchfluss-Monolithen aus dem katalytisch aktiven Material selbst herzustellen.

Der SCR-Abgaskatalysator des erfindungsgemäßen Verfahrens weist 2 oder 3 Tragkörper auf, die ein oder mehrere Speichermaterialien für Ammoniak umfassen und bei dem ein Material mit Ammoniakspeicherkapazität so in Strömungsrichtung des Abgases auf den Tragkörpern verteilt ist, dass bezogen auf den Abgaskatalysator am anströmseitigen Ende weniger Ammoniakspeicherkapazität als am abströmseitigen Ende vorhanden ist. Die Tragkörper werden dabei so präpariert, dass das Speichermaterial auf oder in den Tragkörpern vorhanden ist. Das Material mit Ammoniakspeicherkapazität ist dabei so auf oder in den Tragkörpern zu verteilen, dass in Strömungsrichtung betrachtet, ein Bereich mit niedriger Ammoniakspeicherkapazität und katalytischer Aktivität gefolgt wird von einem Bereich höherer Ammoniakspeicherkapazität. Bevorzugt ist die Ausgestaltung, dass in Strömungsrichtung des Abgases anströmseitig weniger Speicherkapazität für Ammoniak als am abströmseitigen Ende des Abgaskatalysators existiert.

Das Verhältnis an Ammoniakspeicherkapazität von einem Bereich mit niedriger Ammoniakspeicherkapazität zu einem Bereich höherer Ammoniakspeicherkapazität bzw. bevorzugt von anströmseitig vorhandener zu abströmseitig vorhandener Speicherkapazität beträgt 30 - 70 %. Vorteilhaft sind Unterschiede von 35 - 65 % und ganz besonders vorteilhaft von 40 - 60 % in diesem Zusammenhang. Insgesamt beträgt die Speicherkapazität der eingesetzten Ammoniakspeicherkomponenten 0,25 und 3,5 g NH₃ pro Liter Katalysatorvolumen, bevorzugt zwischen 0,5 und 2,2 g NH₃ pro Liter Katalysatorvolumen und besonders bevorzugt zwischen 0,5 und 2,0 g NH₃/Liter Katalysatorvolumen. Unter Berücksichtigung der oben angegebenen Verhältnisse hinsichtlich der Ammoniakspeicherkapazität zeichnet sich ein Bereich niedriger Speicherkapazität dabei durch eine Kapazität von 0,1g NH₃/Liter Katalysatorvolumen - 2,5 g NH₃/Liter Katalysatorvolumen, bevorzugt 0,2 g NH₃/Liter Katalysatorvolumen - 1,45 g NH₃/Liter Katalysatorvolumen und besonders bevorzugt 0,25 g NH₃/Liter Katalysatorvolumen - 1,2 g NH₃ pro Liter Katalysatorvolumen aus. Ein Bereich erhöhter Ammoniakspeicherkapazität zeichnet sich dabei durch eine Kapazität von 0,2 g NH₃/Liter Katalysatorvolumen - 3,5 g NH₃/Liter Katalysatorvolumen, bevorzugt 0,4 g NH₃/Liter Katalysatorvolumen - 2,2 g NH₃/Liter Katalysatorvolumen und besonders bevorzugt 0,5 g NH₃/Liter Katalysatorvolumen - 2 g NH₃/Liter Katalysatorvolumen NH₃ pro Liter Katalysatorvolumen aus. Vorteilhafte Bereiche im Sinne der vorliegenden Erfindung sind Abschnitte des Abgaskatalysators in Strömungsrichtung mit einer relativen Länge von 10 - 50 %, bevorzugt 15 - 45% und ganz besonders bevorzugt von 20 - 40% der Gesamtlänge des Abgaskatalysators. Als anströmseitiges bzw. abströmseitiges Ende des Abgaskatalysators ist in der Regel ein Bereich von 10 - 50 %, bevorzugt 15 - 45% und ganz besonders bevorzugt von 20 - 40% der Gesamtlänge des Abgaskatalysators vom Einlass gerechnet bzw. vom Auslass gerechnet anzusehen.

Dabei kann sich eine kontinuierliche Steigerung der Speicherkapazität über bestimmte Bereiche, bevorzugt über die Länge des Abgaskatalysators ergeben oder es werden Zonen mit jeweils höherer Kapazität von einem Bereich zum anderen, bevorzugt vom Einlass zum Auslass des Abgaskatalysators angeordnet. Dabei kann eine gesteigerte Speicherkapazität für Ammoniak auch durch zusätzliche übereinander angeordnete Beschichtungen erreicht werden oder durch die Verwendung unterschiedlicher Speichermaterialien (siehe z.B. Fig. 6). Im Rahmen der vorliegenden Erfindung kann in vorteilhafter Weise zumindest einer in Strömungsrichtung des Abgases folgende Tragkörper mehr Ammoniakspeicherkapazität aufweisen als der Vorgänger. Die Anzahl der Tragkörper ist 2 oder 3.

Der Abgaskatalysator für die Verminderung von Stickoxiden durch Reaktion mit Ammoniak weist erfindungsgemäß ein oder mehrere Speichermaterialien für Ammoniak auf, wobei diese entsprechend der Speicherkapazität wie oben beschrieben auf dem Träger bzw. den Tragkörpern verteilt sind. Erfindungsgemäß bestimmt das Material, welches die Ammoniakspeicherfähigkeit besitzt auch die katalytische Aktivität für die SCR-Reaktion. Dadurch kann auf zusätzliches, gegenüber dem vorhandenen katalytisch aktiven Material hinausgehendes Ammoniakspeichermaterial verzichtet werden.

Materialien, welche sich für die Anwendung zur Speicherung von NH₃ als günstig erwiesen haben, sind dem Fachmann bekannt (US2006/0010857 AA; WO2004076829 A1).

Als Speichermaterialien für Ammoniak kommen insbesondere mikroporöse Feststoffe, z.B. so genannte Molekularsiebe zum Einsatz. Als Ammoniakspeichermaterial werden Verbindungen ausgewählt aus der Gruppe bestehend aus Zeolithen, wie z.B. Mordenite (MOR), Y-Zeolithe (FAU), ZSM-5 (MFI), Ferrierite (FER), Chabazite (CHA), und β-Zeolithe (BEA) sowie zeolithähnlichen Materialien, wie z.B. Aluminiumphosphate (AIPO) und Siliziumaluminiumphosphat SAPO oder Mischungen davon eingesetzt (EP0324082 A1).

Besonders bevorzugt werden ZSM-5 (MFI), Chabazite (CHA), Ferrierite (FER), SAPO-34 und β-Zeolithe (BEA) eingesetzt. Ganz besonders bevorzugt werden CHA , BEA und AIPO-34 bzw. SAPO-34 verwendet. Äußerst bevorzugt werden Materialien des CHA-Typs und hier höchst bevorzugt SAPO-34 verwendet.

Als katalytisch aktives Material wird gemeinhin der "Washcoat" verstanden, mit dem der Träger versehen wird. Allerdings kann dieser neben der im eigentlichen Sinne katalytisch wirksamen Komponente auch weitere Materialien wie Binder aus Übergangsmetalloxiden, hochoberflächige Trägeroxide wie Titanoxid, Zirkonoxid, Aluminiumoxid, insbesondere gamma-Al₂O₃, oder Ceroxid enthalten. Das erfindungsgemäß eingesetzte katalytisch aktive Material weist allerdings bevorzugt Verbindungen aus der Gruppe der übergangsmetallausgetauschten Zeolithe oder zeolithähnlichen Materialien auf. Derartige Verbindungen sind dem Fachmann hinreichend bekannt (EP324082 A1). Es werden als Zeolithe oder zeolithähnliche Materialien die eingesetzt, die auch für die Ammoniakspeicherung im Abgaskatalysator sorgen. Bevorzugt sind diesbezüglich Materialien aus der Gruppe bestehend aus Chabazit, SAPO-34, ALPO-34, Zeolith β und ZSM-5. Besonders bevorzugt werden Zeolithe bzw. zeolithähnliche Materialien vom Chabazit-Typ, insbesondere SAPO-34, verwendet. Diese Materialien sind, um eine ausreichende Aktivität zu gewährleisten, vorzugsweise mit Übergangsmetallen aus der Gruppe bestehend aus Eisen, Kupfer, Mangan und Silber versehen. Ganz besonders vorteilhaft ist Kupfer in diesem Zusammenhang zu nennen. Der Fachmann weiß dabei, wie er die Zeolithe oder das zeolithähnliche Material mit den Übergangsmetallen zu versehen hat (PCT/EP2012/061382 sowie dort zitierte Literatur), um eine gute Aktivität gegenüber der Reduktion von Stickoxiden mit Ammoniak bereitstellen zu können.

Unter anderem für Abgasnachbehandlungssysteme, welche einen Stickoxidspeicherkatalysator gefolgt von einem erfindungsgemäßen Abgaskatalysator aufweisen - was ein bevorzugtes System darstellt - hat es sich als günstig erwiesen, den SCR-Abgaskatalysator so auszugestalten, dass er die Möglichkeit besitzt, eine ausreichende Menge an Ammoniak (NH₃) zu speichern. Die Zusammenschaltung von derartigen Abgasnachbehandlungsaggregaten ist zum Beispiel in der EP1687514 A1 beschrieben worden. Bei diesen Systemen ist von Vorteil, dass der Stickoxidspeicherkatalysator in der Regenerationsphase leicht auch Ammoniak produziert. Sofern der stromabwärts befindliche SCR-Abgaskatalysator einen NH₃-Speicher aufweist, kann das so produzierte NH₃ in diesem gespeichert werden und stünde für die anschließende Reduktion von durch den vorangegangenen Stickoxidspeicherkatalysator durchgebrochenem NOₓ zur Verfügung. In solchen Systemen ist der SCR-Abgaskatalysator besonders bevorzugt einsetzbar.

Generell ist ein SCR-Katalysator dann besonders aktiv, wenn sein Ammoniakspeicher zumindest teilweise gefüllt ist. Die Dosierung von Ammoniak in den Abgasstrang erfolgt meist über eine externe Dosiereinrichtung direkt in den Abgasstrang vor dem SCR-Katalysator. Ein Schlupf von Ammoniak in Folge einer Überdosierung oder einer Ammoniakdesorption in Folge einer raschen Temperaturerhöhung sollte vorteilhafter Weise vermieden werden, da Ammoniak einen stark beißenden Geruch aufweist und als Sekundär- oder Tertiäremission nicht unbehandelt in die Atmosphäre gelangen sollte. Aufgrund der hohen Dynamik der Betriebszustände eines Motors ist es allerdings nur schwer möglich den Ammoniak so zu dosieren, dass immer ausreichend davon für die Reduktion von NOₓ zur Verfügung steht, auf der anderen Seite aber möglichst alles zudosierte Ammoniak verbraucht wird. Einen gewissen Puffer schafft hier das eingesetzte Ammoniakspeichermaterial. Vorteilhaft ist jedoch weiterhin, wenn sich am abströmseitigen Ende des erfindungsgemäßen Abgaskatalysators ein Ammoniak-Oxidationskatalysator (AMOX) befindet. Überschüssiger Ammoniak wird an diesem zu unschädlichem Stickstoff oxidiert. Der AMOX-Katalysator kann als separate Einheit hinter dem Abgaskatalysator angeordnet sein. Vorteilhaft ist jedoch, wenn sich an, auf oder unter dessen abströmseitigen Ende ein Ammoniakoxidationskatalysator (AMOX) befindet. Entsprechende Katalysatoren sind dem Fachmann bekannt (US5120695; EP1892395 A1; EP1882832 A2; EP1876331 A2; WO12135871 A1; US2011271664 AA; WO11110919 A1).

Unter dem Begriff "Zeolith" versteht man poröse Materialien mit einer Gitterstruktur aus eckenverknüpften AlO₄ und SiO₄-Tetraedern gemäß der allgemeinen Formel (W.M. Meier, Pure & Appl. Chem., Vol. 58, No. 10, pp. 1323-1328, 1986):

M_{m/z} [m AlO₂ * n SiO₂] * q H₂O

Die Struktur eines Zeolithen umfasst somit ein aus Tetraedern aufgebautes Netzwerk, das Kanäle und Hohlräume umschließt. Man unterscheidet natürlich vorkommende und synthetitisch hergestellte Zeolithe.

Unter dem Begriff "zeolithähnliche Verbindung" wird im Rahmen dieser Schrift eine Verbindung verstanden, die denselben Strukturtyp aufweist, wie eine natürlich vorkommende oder eine synthetisch hergestellte Zeolithverbindung, die sich von solchen jedoch dadurch unterscheidet, dass die entsprechende Käfigstruktur nicht ausschließlich aus Aluminium- und Siliziumgerüstatomen aufgebaut ist. In solchen Verbindungen werden die Aluminium- und/oder Siliziumgerüstatome anteilig durch andere drei-, vier- oder fünfwertige Gerüstatome wie beispielsweise B(III), Ga(III), Ge(IV), Ti(IV) oder P(V) ersetzt. In der Praxis am häufigsten zur Anwendung kommt der Ersatz von Aluminium- und/oder Siliziumgerüstatomen durch Phosphoratome, beispielsweise in den Siliziumaluminiumphosphaten oder in den Aluminiumphosphaten, die in Zeolithstrukturtypen kristallisieren. Prominente Beispiele sind das in Chabazitstruktur kristallisierende Siliziumaluminiumphosphat SAPO-34 und das in Chabazitstruktur kristallisierende Aluminiumphosphat AlPO-34.

### Figuren:

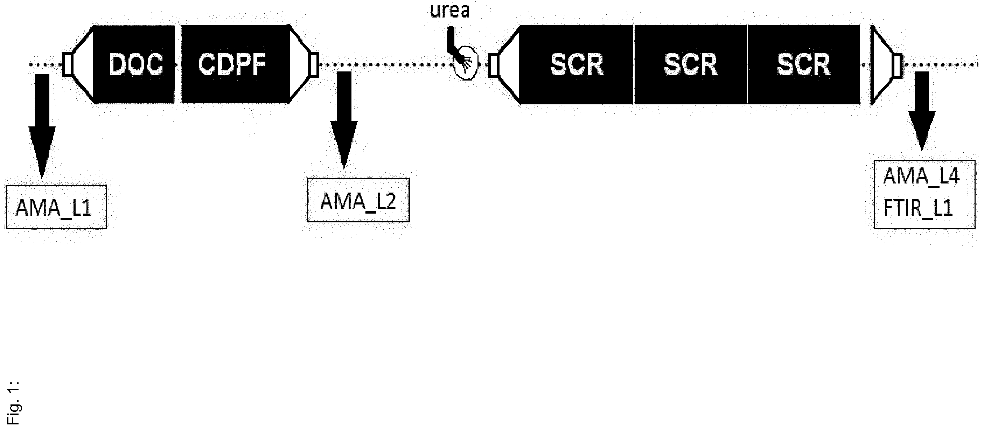

Fig. 1: Figur 1 zeigt beispielhaft ein Abgasreinigungssystem samt der für die Durchführung des experimentellen Teils notwendigen Analysennahmestellen. Das System besteht aus einem Oxidationskatalysator, gefolgt von einem katalytisch beschichteten Partikelfilter einer Zugabeeinheit für Harnstoff und einem aus drei Trägern bestehenden SCR-Katalysator.

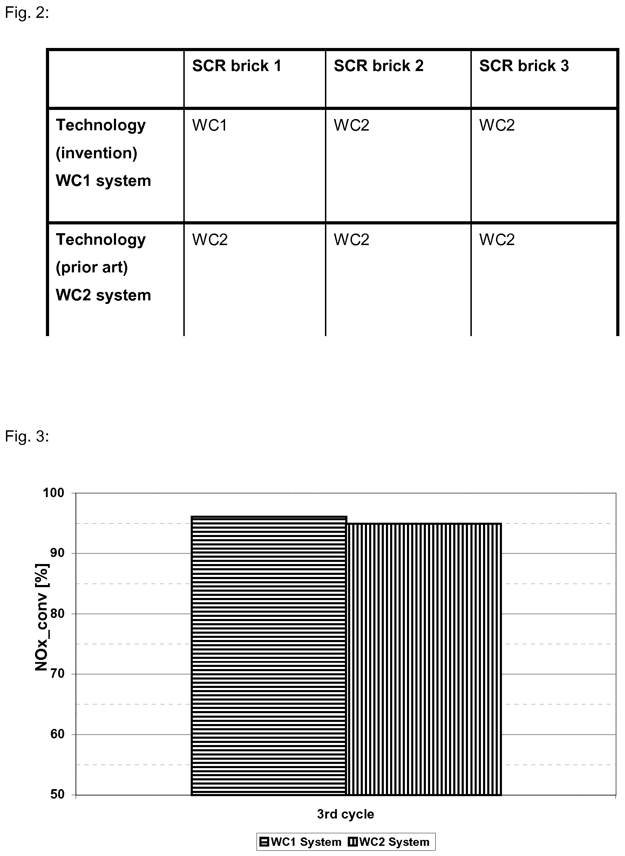

Fig. 2: Figur 2 bezieht sich auf zwei unterschiedliche Ausgestaltungen des eingesetzten SCR-Katalysators. Im Fall 1 besitzt der vordere Träger - mit WC1 bezeichnet - eine um 60 Gew.-% verringerte Washcoat-Beladung und damit eine entsprechend verringerte Ammoniakspeicherkapazität verglichen mit dem zweiten und dritten Träger (WC2). Im unteren Fall sind alle Träger gleich aufgebaut. Hier stellt das katalytisch aktive Material vollständig auch die Ammoniakspeicherfähigkeit zur Verfügung.
Fig. 3: Figur 3 zeigt die Ergebnisse, die mit den beiden alternativen Systemen der Fig. 2 zu erzielen sind. Hierbei wird sichtbar, dass das erfindungsgemäße System aufweisend den Träger WC1 eine höhere Gesamt-NOx-Konvertierung aufweist als das Referenzsystem bezeichnet mit Trägern aufweisend ausschließlich WC2. Dargestellt sind hier die NOX Konvertierungen im 3. warmen WHTC einer Serie aufeinanderfolgender warmer Zyklen.

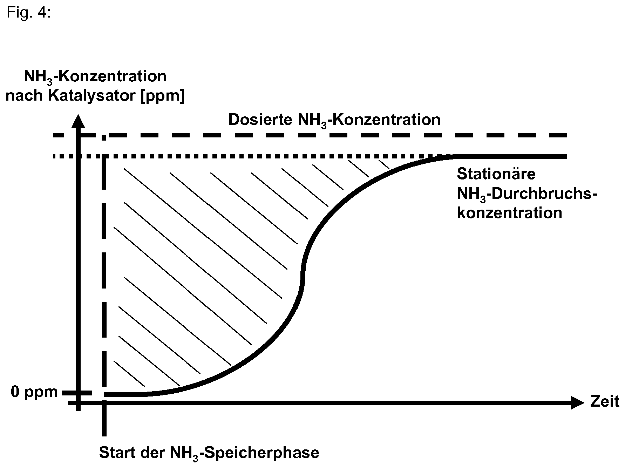

Fig. 4: Die im Rahmen dieser Erfindung angesprochene Ammoniakspeicherkapazität wird als Quotient aus gespeicherter Masse Ammoniak pro Liter Katalysatorvolumen angegeben. Sie wird experimentell in einem Strömungsrohrreaktor bestimmt. Zur Vermeidung von unerwünschter Ammoniakoxidation am Reaktormaterial wird ein Reaktor aus Quarzglas verwendet. Aus dem Bereich des Katalysators, dessen Ammoniakspeicherkapazität bestimmt werden soll, wird ein Bohrkern als Prüfling entnommen. Bevorzugt wird ein Bohrkern mit 1 Zoll Durchmesser und 3 Zoll Länge als Prüfling entnommen. Der Bohrkern wird in den Strömungsrohrreaktor eingesetzt und bei einer Temperatur von 600 °C in einer Gasatmosphäre aus 500 ppm Stickstoffmonoxid, 5 Vol.-% Sauerstoff, 5 Vol.-% Wasser und Rest Stickstoff mit einer Raumgeschwindigkeit von 30000 h⁻¹ für 10 Minuten konditioniert. Anschließend wird in einem Gasgemisch aus 5 Vol.-% Sauerstoff, 5 Vol.-% Wasser und Rest Stickstoff mit einer Raumgeschwindigkeit von 30000 h⁻¹ die Messtemperatur von 200 °C angefahren. Nach Stabilisierung der Temperatur wird die NH₃-Speicherphase durch Aufschalten eines Gasgemisch aus 450 ppm Ammoniak, 5 Vol.-% Sauerstoff, 5 Vol.-% Wasser und Rest Stickstoff mit einer
Raumgeschwindigkeit von 30000 h⁻¹ eingeleitet. Dieses Gasgemisch bleibt so lange aufgeschaltet, bis abströmseitig vom Prüfling eine stationäre Ammoniakdurchbruchskonzentration verzeichnet wird. Die bei Stationarität gemessene NH₃-Konzentration nach Katalysator kann durch Ammoniakoxidation am Prüfling auch unter der dosierten NH₃-Konzentration liegen. Die auf dem Prüfling eingespeicherte Masse an Ammoniak wird aus der aufgezeichneten Ammoniak-Durchbruchskurve durch Integration vom Start der NH₃-Speicherphase bis zum Erreichen der Stationarität unter Einbeziehung der gemessenen stationären NH₃-Durchbruchskonzentration sowie dem bekannten Volumenfluss berechnet (schraffierte Fläche in der Abbildung). Die Ammoniakspeicherkapazität wird berechnet als Quotient aus der eingespeicherten Masse an Ammoniak, geteilt durch das Volumen des getesteten Bohrkerns.

### Beispiele:

Die Vermessung des erfindungsgemäßen Systems erfolgte an einem Nutzfahrzeugmotor mit 13I Hubvolumen. Das gesamte Abgasnachbehandlungssystem bestand aus einem DOC, einem nachgeschalteten DPF und dem SCR-System, aufweisend 3 aufeinanderfolgende Katalysatorbausteine (Brick1 bis Brick3). In beiden untersuchten Fällen wurde das DOC+DPF Vorsystem unverändert gelassen. Als Reduktionsmittel wurde eine wässrige Harnstofflösung (Handelbezeichnung AdBlue^{®}) in Strömungsrichtung vor dem Abgaskatalysator eingespritzt. Dazu wurde eine kommerziell verfügbare Einspritzdüse verwendet. Die Menge des eingespritzten Reduktionsmittels wurde derart gewählt, dass jederzeit 30% Überangebot an Reduktionmittel bezogen auf die NOx Emissionen des Motors, die am Eingang des SCR Systems anliegen, verfügbar war.

Im Fall des Systems beschrieben in der Figur 2 bestand die gefahrene Testserie aus 5 aufeinander folgenden WHTC Zyklen. Dabei wurde nicht der gesamte Zyklus, bestehend aus einem kalten und einem warmen Anteil gefahren, sondern nur der warme Anteil nach jeweils 10 minütigem Stillstand. Begonnen wurde die Testserie jeweils mit einem Abgaskatalysator, dessen Ammoniakspeicher zu Beginn komplett leer war.

Während der Zyklen wurden die NOx-Emissionen an- und abströmseitig des SCR-Systems gemessen und aufintegriert und anschließend bezogen auf die während des Zyklus verrichtete Arbeit. Die Konvertierung wurde für beide getesteten Systemvarianten bestimmt als Differenz der spezifischen Emissionen bezogen auf die spezifische Eingangsemission.

## Patentansprüche

1. Verfahren zur Verminderung der Stickoxide im Abgas eines Verbrennungsprozesses von mager verbrennenden Motoren durch Reaktion mit Ammoniak über einem SCR-Abgaskatalysator, wobei man wobei man das Abgas in Gegenwart von Ammoniak über den SCR-Abgaskatalysator leitet, und wobei der SCR-Abgaskatalysator 2 oder 3 Tragkörper aufweist, die ausgewählt sind aus Durchfluss-Monolithen oder Partikelfiltern, und wobei die 2 oder 3 Tragkörper ein oder mehrere Speichermaterialien für Ammoniak umfassen, bei denen ein Material mit Ammoniakspeicherkapazität so in Strömungsrichtung des Abgases auf den Tragkörpern verteilt ist, dass in Strömungsrichtung betrachtet, ein Bereich mit niedriger Ammoniakspeicherkapazität gefolgt wird von einem Bereich höherer Ammoniakspeicherkapazität,
**dadurch gekennzeichnet, dass**
das Material, welches die Ammoniakspeicherfähigkeit besitzt, auch die katalytische Aktivität für die SCR-Reaktion bestimmt, und dass dieses Material ausgewählt ist aus der Gruppe bestehend aus Zeolithen, wie z.B. Mordenite (MOR), Y-Zeolithe (FAU), ZSM-5 (MFI), Ferrierite (FER), Chabazite (CHA), und β-Zeolithe (BEA) sowie zeolithähnlichen Materialien, wie z.B. Aluminiumphosphate (AlPO) und Siliziumaluminiumphosphat (SAPO) oder Mischungen davon,
und wobei das Verhältnis an Ammoniakspeicherkapazität von einem Bereich mit niedriger Ammoniakspeicherkapazität zu einem Bereich höherer Ammoniakspeicherkapazität bzw. bevorzugt von anströmseitig vorhandener zu abströmseitig vorhandener Speicherkapazität 30 - 70% beträgt,
wobei sich der Bereich niedriger Speicherkapazität durch eine Kapazität von 0.1 - 2.5 g NH₃/Liter Katalysatorvolumen und der Bereich erhöhter Speicherkapazität durch eine Kapazität von 0.2 - 3.5 g NH₃/Liter Katalysatorvolumen auszeichnet,
und wobei für den Fall, dass Partikelfilter als Tragkörper eingesetzt werden, diese selbst keinen Anstieg des katalytisch aktiven Materials aufweisen sollen, so dass in jedem Volumenelement des Partikelfilters entlang der Strömungsrichtung eine im Rahmen der Produktionsgenauigkeit nicht steigende Konzentration an katalytisch aktivem Material vorhanden ist.

2. Verfahren nach Anspruch 1,
**dadurch gekennzeichnet, dass**
man als Speichermaterial für Ammoniak Zeolithe oder zeolithähnliche Materialien ausgewählt aus der Gruppe bestehend aus Chabazit, SAPO-34, ALPO-34 und Zeolith β einsetzt.

3. Verfahren nach einem der Ansprüche 1 und/oder 2,
**dadurch gekennzeichnet, dass**
sich an, auf oder unter dem abströmseitigen Ende des SCR-Abgaskatalysators ein Ammoniakoxidationskatalysator befindet, und dass das Abgas in Gegenwart von Ammoniak über den SCR-Abgaskatalysator mit abströmseitigem Ammoniakoxidationskatalysator geleitet wird, wobei überschüssiger Ammoniak am Ammoniakoxidationskatalysator zu unschädlichem Stickstoff oxidiert wird.

## Claims

1. Method for reducing nitrogen oxides in the exhaust gas of a combustion process in lean-burn engines by reaction with ammonia via an SCR exhaust gas catalyst, wherein the exhaust gas is passed over the SCR exhaust gas catalyst in the presence of ammonia, and wherein the SCR exhaust catalyst comprises 2 or 3 support bodies selected from flow-through monoliths or particulate filters, and wherein the 2 or 3 support bodies comprise one or more ammonia storage materials, in which a material with ammonia storage capacity is distributed on the support bodies in the direction of exhaust gas flow such that, viewed in the direction of flow, a region with low ammonia storage capacity is followed by a region with higher ammonia storage capacity, **characterized in that**
the material, which possesses ammonia storage capacity, also determines the catalytic activity for the SCR reaction, and that this material is selected from the group consisting of zeolites, such as mordenites (MOR), Y-zeolites (FAU), ZSM-5 (MFI), ferrierites (FER), chabazites (CHA), and β-zeolites (BEA), as well as zeolite-like materials, such as aluminium phosphates (AIPO) and silicon aluminium phosphate (SAPO) or mixtures thereof, and wherein the ratio of ammonia storage capacity from a region with low ammonia storage capacity to a region with higher ammonia storage capacity - or, preferably, from storage capacity on the inflow side to that on the outflow side-is 30-70%,
wherein the low storage capacity range is **characterized by** a capacity of 0.1 - 2.5 g NH₃ per litre of catalyst volume, and the high storage capacity range is **characterized by** a capacity of 0.2-3.5 g NH₃ per litre of catalyst volume, and wherein, in the event that particulate filters are used as support bodies, these themselves should not exhibit an increase in the catalytically active material, so that in each volume element of the particulate filter along the flow direction, there is a concentration of catalytically active material that does not increase within the limits of production accuracy.

2. Method according to claim 1, **characterized in that**
zeolites or zeolite-like materials selected from the group consisting of chabazite, SAPO-34, ALPO-34, and zeolite β are used as storage media for ammonia.

3. Method according to one of claims 1 and/or 2, **characterized in that**
an ammonia oxidation catalyst is located on, at, or beneath the downstream end of the SCR exhaust catalyst, and that the exhaust gas is passed through the SCR exhaust catalyst with the downstream ammonia oxidation catalyst in the presence of ammonia, whereby excess ammonia is oxidized to harmless nitrogen at the ammonia oxidation catalyst.

## Revendications

1. Procédé de réduction des oxydes d'azote dans les gaz d'échappement d'un processus de combustion de moteurs à combustion fonctionnant en mélange pauvre, par réaction avec de l'ammoniac sur un catalyseur d'échappement SCR, dans lequel on fait passer les gaz d'échappement en présence d'ammoniac sur le catalyseur d'échappement SCR, et dans lequel le catalyseur d'échappement SCR présente 2 ou 3 supports sélectionnés parmi les monolithes à écoulement traversant et les filtres à particules, et dans lequel les 2 ou 3 supports comprennent un ou plusieurs matériaux de stockage d'ammoniac, concernant lesquels un matériau présentant une capacité de stockage d'ammoniac est réparti sur les supports, dans le sens de l'écoulement des gaz d'échappement, de telle façon que, vu dans le sens de l'écoulement, une zone à faible capacité de stockage d'ammoniac est suivie d'une zone à plus forte capacité de stockage d'ammoniac ; **caractérisé en ce que**
le matériau possédant la capacité de stockage d'ammoniac détermine également l'activité catalytique pour la réaction SCR, et **en ce que** ce matériau est sélectionné dans le groupe constitué par les zéolithes, telles que les mordénites (MOR), les zéolithes Y (FAU), ZSM-5 (MFI), les ferriérites (FER), les chabazites (CHA) et les zéolithes β (BEA), ainsi que les matériaux analogues aux zéolithes, tels que les phosphates d'aluminium (AlPO) et le phosphate de silicium et d'aluminium (SAPO) ou des mélanges de ceux-ci ;
le rapport concernant la capacité de stockage d'ammoniac d'une zone à faible capacité de stockage d'ammoniac à une zone à plus forte capacité de stockage d'ammoniac, c'est-à-dire de préférence de la capacité de stockage présente en amont à celle présente en aval, allant de 30 à 70 %,
ladite zone à faible capacité de stockage **se caractérisant par** une capacité de 0,1 à 2,5 g de NH₃/litre de volume de catalyseur et la zone à plus forte capacité de stockage par une capacité de 0,2 à 3,5 g de NH₃/litre de volume de catalyseur, et
dans le cas où des filtres à particules sont utilisés comme supports, ceux-ci ne doivent pas présenter eux-mêmes d'augmentation du matériau catalytiquement actif, de façon qu'il se trouve, dans chaque élément de volume du filtre à particules le long du sens de l'écoulement, une concentration de matériau catalytiquement actif qui n'augmente pas dans le cadre de la précision de production.

2. Procédé selon la revendication 1, **caractérisé en ce que**
on utilise, comme matériau de stockage d'ammoniac, des zéolithes ou des matériaux analogues aux zéolithes sélectionnés dans le groupe constitué par la chabazite, SAPO-34, AlPO-34 et la zéolithe β.

3. Procédé selon l'une des revendications 1 et/ou 2, **caractérisé en ce que**
un catalyseur d'oxydation d'ammoniac se trouve sur, dans ou sous l'extrémité aval du catalyseur d'échappement SCR, et **en ce que** les gaz d'échappement sont conduits en présence d'ammoniac sur le catalyseur d'échappement SCR doté du catalyseur d'oxydation d'ammoniac en aval, l'ammoniac excédentaire étant oxydé en azote inoffensif au contact du catalyseur d'oxydation d'ammoniac.
